# EUROPÄISCHE PATENTSCHRIFT

(11) **EP 2 067 750 B1**
(45) Veröffentlichungstag und Bekanntmachung des Hinweises auf die Patenterteilung: **05.12.2012**
(21) Anmeldenummer: 08019792.4
(22) Anmeldetag: 13.11.2008
(51) Int. Cl.: C02F 3/30, C02F 3/34, C02F 3/12

(54) **Verfahren und Vorrichtung zur Behandlung von Abwasser mit hohem Stickstoff- und niedrigem BSB5-Anteil, insbesondere von Deponiewasser**
Method and device for treating waste water with a high share of nitrogen and low share of BSB5, especially water on a waste tip
Procédé et dispositif destinés au traitement d'eau de recirculation contenant une part élevée d'azote et une part basse de BSB5, notamment eau de dépôt

(30) Priorität: 27.11.2007 DE 102007056996
(43) Veröffentlichungstag der Anmeldung: 10.06.2009
(73) Patentinhaber: LAMBDA Gesellschaft für Gastechnik mbH, 42329 Wuppertal (DE)
(72) Erfinder: Denecke, Martin, 51379 Leverkusen (DE); Rekers, Volker, 44859 Bochum (DE); Walter, Uwe, 45130 Essen (DE)
(74) Vertreter: Vomberg, Friedhelm

(56) Entgegenhaltungen:
- US-A- 5 308 492
- US-B1- 6 589 425
- INGO SCHMIDT ET AL: "New concepts of microbial treatment processes forthe nitrogen removal in wastewater" FEMS MICROBIOLOGY REVIEWS, Bd. 27, Nr. 4, 16. April 2003 (2003-04-16) , Seiten 481-492, XP002521912 Gefunden im Internet: URL:http://www3.interscience.wiley.com/cgi -bin/fulltext/118878912/PDFSTART> [gefunden am 2009-03-31]
- D. PAREDES ET AL: "New Aspects of Microbial Nitrogen Transformations in the Context of Wastewater Treatment - A Review" ENG. LIFE SCI., Bd. 7, Nr. 1, Februar 2007 (2007-02), Seiten 13-25, XP002521913 Gefunden im Internet: URL:http://www.pumpsea.icat.fc.ul.pt/downl oads/Eng.%20Life%20Sci.%207,%20issue%201,% 20pg%2013-25.pdf> [gefunden am 2009-03-31]

## Beschreibung

Die Erfindung betrifft ein Verfahren zur Behandlung von Abwasser, insbesondere von Deponiewasser. Es handelt sich um einen zweistufigen Prozess, bei dem das Abwasser in einer ersten Stufe mit einem Belebtschlamm vermischt und das im Abwasser enthaltene Ammonium teiloxidiert und anschließend in einer zweiten Stufe zu gasförmigem Stickstoff umgewandelt wird.

Ähnliche Zusammensetzungen wie in Deponiesickerwässern finden sich in Teilströmen von Kläranlagen sowie in Prozesswässern bei der biologischen Abfallbehandlung.

In der Abwasserbehandlung spielt die Entfernung des Stickstoffes eine zentrale Rolle, da der Stickstoff im Gewässer und in der Umwelt Schäden, z. B. durch Überdüngung, Sauerstoffzehrung und Toxizität hervorrufen kann. Der Stickstoff kommt durch menschliche Ausscheidungen, industrielle Anwendungen (Salpetersäure) oder aber bei biologischen Behandlungsanlagen durch den Abbau von organischen Verbindungen in das Abwasser. Dies gilt auch für Deponien, bei denen Sickerwasser entsteht, dass mit Stickstoff hoch belastet ist. Die Zusammensetzung des Sickerwassers einer Deponie unterliegt sowohl kurzfristigen Schwankungen, z. B. durch extreme Niederschläge, die das Sickerwasser stark verdünnen als auch langfristigen Änderungen, die abhängig vom Betrieb und der Entwicklung der jeweiligen Deponie sind. Hier sind der Abdeckungsgrad, die Einbautechnik, das Deponiealter und ähnliche Effekte zu nennen. Das Verhältnis zwischen Stickstoff und abbaubarem CSB (chemischer Sauerstoff-Bedarf) im Sickerwasser ändert sich mit zunehmendem Alter der Deponie deutlich. Je älter eine Deponie ist, desto geringer wird der Anteil an abbaubarem CSB im Sickerwasser. Der Stickstoff liegt im Abwasser zum größten Teil als Ammoniumstickstoff (NH₄-N) vor.

Ingo Schmidt et al "New Concepts of microbal treatment process für the nitrogen removal in Wastewater" - FEMS Microbiology Review 27 (2003), Seite 481-492 beschreibt die nach dem Stand der Technik bekannten Verfahren der teilweisen Nitrifikation, SHARON, Anammox und Canon. Bei der teilweisen Nitrifikation wird Ammonium zu Nitrit oxidiert, wobei die Oxidation zu einem Nitrat verhindert werden soll. Im Sharon-Verfahren werden die unterschiedlichen Wachstumsraten der Ammoniumoxidierer und der Nitrit-Oxidierer bei mehr als 26°C ausgenutzt. Das Anammox-Verfahren beruht auf einer anaeroben Ammoniumoxidation, wobei Nitrit zusammen mit Ammonium zu Luftstickstoff abgebaut wird. Das Canon-Verfahren stellt eine Kombination der teilweisen partiellen Nitrifikation und des Anammox-Verfahrens in einem einzigen belüfteten Reaktor dar.

Die US 6589425 B1 beschreibt ein Verfahren zur Behandlung von industriellen stark mit Ammonium belasteten Abwässern, bei den nitridierende Microorganismen in Gegenwart von einer suspendierten Trägersubstanz mit einer spezifischen Oberfläche von > 20m²/g eingesetzt werden.

In der DE 43 39 630 C1 wird beschrieben, dass die Nitrifikation vorzugsweise einer BSB₅/CSB-Reduzierung bzw. Elimination nachgeschaltet wird, um die anorganische Kohlenstoffquelle und damit die für die Nitrifikanten notwendigen Milieubedingungen bereitzustellen. Die Denitrifikation, also die Reduzierung von Nitrat (NO₃-N) zu elementarem Stickstoff (N₂) ist ein Reduktionsprozess, der anoxische Abwasserbedingungen voraussetzt. Im Abwasser darf sich also kein gelöster Sauerstoff befinden. Gleichzeitig müssen in den nach dem Stand der Technik praktizierten Verfahren biologisch abbaubare organische Substanzen als H-Donator vorhanden sein. Soweit diese zuvor bei der BSB₅-CSB-Elimination beseitigt wurden, entstehen deshalb Probleme, weil dann keine oder keine ausreichenden organischen Kohlenstoffquellen mehr vorhanden sind.

Nach dem Stand der Technik können Bakterien für die vorstehend genannten Prozesse sowohl in Form einer Suspensionsbiologie (Belebtschlammverfahren) als auch in Form einer Festbettbiologie eingesetzt werden. Bei dem Belebtschlammverfahren wird die Biomasse in einer Suspension gehalten. Ein solches Verfahren erfordert eine Biomasserückhaltung z. B. über ein Sedimentationsbecken, um die Biomasse anschließend bei hohen Rezirkulationsraten wieder in den Belebtschlammreaktor zurückführen und so ein möglichst hohes Schlammalter realisieren zu können. Nur ein geringer Teil wird als sogenannter Überschussschlamm abgezogen.

Bei Festbettverfahren werden Aufwuchsflächen für die Mikroorganismen zur Verfügung gestellt, so dass ein Sedimentationsbecken nicht zwingend erforderlich ist. Um die für die Denitrifikation notwendige organische Kohlenstoffquelle bereit zu stellen, wäre es bei mehrstufigen Verfahren grundsätzlich möglich, einen Teilstrom aus dem der BSB₅/CSB-Reduzierung dienenden Reaktor in das Denitrifikationsbecken zu führen. Hierbei besteht jedoch die Gefahr, dass zuviel organische Fracht in das Denitrifikationsbecken geführt wird und damit kein sauberes Ablaufwasser mehr erreichbar ist.

Eine biologische Abwasserreinigung in einem einzigen Reaktor müsste zunächst eine Nitrifikationsstufe unter Sauerstoffzufuhr und anschließend - nach Abschalten einer Luftzufuhr- eine Denitrifikation enthalten, was einen erheblichen Mess- und Regelaufwand erfordert. In der DE 43 39 630 C1 wird daher zur Vereinfachung der Verfahrenstechnik ein Festbettverfahren zur simultanen Reduzierung des biologischen und chemischen Sauerstoffbedarfs, zur Nitrifikation und Denitrifikation von Abwasser durch intermittierendes Belüften mindestens eines Festbettreaktors vorgeschlagen, wobei das Abwasser während eines ersten Zeitintervalls zur BSB₅- und CSB-Reduzierung bis zur Nitrifikation, im Reaktor belüftet, während eines anschließenden zweiten Zeitintervalls der Reaktor mit neuem Abwasser beschickt und während der Beschickung des Reaktors mit neuem Abwasser die Belüftung zumindest zeitweise abgeschaltet wird. Für eine solche Verfahrensführung müssen folgende Bedingungen erfüllt sein:
- ausreichende Belüftung für die Nitrifikation,
- ausreichendes Schlammalter für die Nitrifikation,
- ausreichender Gehalt an abbaubarem CSB für die Denitrifikation.

Enthält das Abwasser nicht die benötigte Menge an abbaubarem CSB, muss dieser zugesetzt werden. Während der Gehalt an abbaubarem CSB bei der biologischen Reinigung von kommunalen Abwässern meist hoch genug für die Denitrifikation ist, muss z. B. für Deponiesickerwasser immer abbaubarer CSB, z. B. in Form von Methanol oder Essigsäure zugesetzt werden. Der im Rahmen der Denitrifikation abgebaute CSB erzeugt Überschussschlamm, der zu behandeln bzw. zu entsorgen ist. Der Nachteil einer zweistufigen Behandlung über eine Nitrifikation und eine anschließende Denitrifikation liegt darin, dass ein hoher Energiebedarf für die Belüftung benötigt wird, abbaubarer CSB eingesetzt wird und Überschussschlamm erzeugt wird.

In der EP 0 826 639 B1 wird ein Verfahren zur biologischen Behandlung ammoniumreichen Abwassers beschrieben, bei dem in mindestens einem Reaktor, der eine Temperatur von mindestens 25°C hat, das Abwasser durch diesen Reaktor geleitet wird, mit einer Population, gewonnen durch natürliche Selektion ohne Schlammrewobei wobei in einem ersten Schritt unter Zusatz von Sauerstoff ein nitritreiches Abwasser gebildet und das so erhaltene nitritreiche Abwasser, falls erforderlich, einem zweiten Schritt unterworfen wird, bei dem kein Sauerstoff zugeführt wird. Zur Denitrifikation wird eine Kohlenstoffquelle wie Methanol verwendet, wobei die Kontaktzeit zwischen dem ammoniumreichen Abwasser und den nitrifizierenden Bakterien höchstens ungefähr 2 Tage beträgt und der pH-Wert des Mediums durch Zugabe besagter Kohlenstoffquelle auf einen Wert zwischen 6,5 und 8,5 eingestellt wird. Der Überschussschlamm, gebildet durch Wachstum der nitrifizierenden und denitrifizierenden Bakterien und der durch die Denitrifikation gebildete Ausfluss werden extrahiert. Der Bedarf der Kohlenstoffquelle (z. b. Methanol) während der Behandlung wird als Funktion der Menge der Wärmeentwicklung im Reaktor kontrolliert.

Es ist Aufgabe der vorliegenden Erfindung, ausgehend von dem vorgenannten Stand der Technik, ein Verfahren und eine Vorrichtung anzugeben, die ohne großen Aufwand einfach handhabbar sind und die vorgenannten Nachteile vermeiden.

Diese Aufgabe wird durch das Verfahren nach Anspruch 1 gelöst, das aus einem zweistufigen Prozess besteht, bei dem das Abwasser in einer ersten Stufe mit Belebtschlamm vermischt und das im Abwasser enthaltene Ammonium durch Einstellung einer Temperatur zwischen 28 °C und 39 °C und/oder eines Sauerstoffgehaltes zwischen 0,01 mg/L und 0,4 mg/L nur zum Teil, nämlich zu maximal 50%, zu Nitrit oxidiert und die vom Belebtschlamm getrennte wässrige nitrit- und ammoniumhaltige Phase anschließend in einer zweiten Stufe unter Sauerstoffausschluss in einem oder mehreren Aktivkohlefestbettreaktoren zu Stickstoff reagiert. Bei diesem Verfahren wird von dem Grundgedanken ausgegangen, dass die Oxidation des Ammoniums in der ersten Stufe nicht vollständig zum Nitrat, sondern nur zum Nitrit erfolgt und dass das noch vorhandene oder hinzugefügte Ammonium unter anaeroben Bedingungen mit dem Nitrit zu molekularem Stickstoff reagiert. Diese Umsetzung zu molekularem Stickstoff können nur spezielle Bakterienarten katalysieren, die der Gattung der Planctomyceten angehören, wobei das Animpfverhältnis zwischen eingesetzter Aktivkohle und planctomycetenhaltiger Granula bezogen auf das Volumen zwischen 100:1 und 10:1 liegt. In der ersten und zweiten Stufe laufen somit folgende Reaktionen ab:
1.) NH₄⁺ + 1,5 O₂ → NO₂ + H₂O + 2H⁺
2.) NO₂ + NH₄⁺ → N₂ + 2 H₂O

Aus der zweiten Gleichung wird auch ersichtlich, dass für den Abbau des Ammoniums kein Kohlenstoff erforderlich ist. Eine solche Verfahrensführung hat die folgenden Vorteile:
a) eine Energieersparnis, da nur eine Teilnitrifikation in der ersten Stufe notwendig ist,
b) es ist kein abbaubarer Kohlenstoff erforderlich und
c) es entsteht nur eine geringe Überschussschlammmenge.

Durch die Wahl einer Betriebstemperatur zwischen 28°C und 39°C ist die Wachstumsrate der Ammoniumoxidierer größer als die der Nitritoxidierer, so dass die Nitritoxidierer überwachsen werden und kein Nitrat mehr gebildet wird.

Andere Möglichkeiten sind die Limitierung des Sauerstoffes, durch die ebenfalls eine Nitritbildung anstelle einer Nitratbildung gefördert wird. Hierbei wird die unterschiedliche Sättigungskonzentration für Sauerstoff ausgenutzt. Da die Ammoniumoxidierer bei wesentlich geringeren Sauerstoffkonzentrationen als die Nitritoxidierer wachsen können, werden diese gefördert und verdrängen die Nitritoxidierer aus dem System.

Vorzugsweise läuft die erste Stufe geregelt ab, d. h. der Ammoniumgehalt wird gesteuert. Wie bereits erwähnt, wird die erste Stufe unter mikroaerophilen Bedingungen betrieben. Der in der ersten Stufe eingestellte Sauerstoffgehalt liegt zwischen 0,1 mg/l und 0,4 mg/l.

Um die Oxidation des Nitrits zum Nitrat zu unterdrücken, können weitere Maßnahmen vorgenommen werden, die in den Unteransprüchen aufgeführt sind.

Vorzugsweise wird über eine Prozesssteuerung ein NH₄-N/NO₂-N-Verhältnis im Ablauf der ersten Stufe von 1:1 bis 1: 1,2, vorzugsweise von 1:1,1 eingestellt.

Vorzugsweise werden nach dem erfindungsgemäßen Verfahren mehrere hintereinander geschaltete Aktivkohlefestbettreaktoren verwendet, die sukzessive durchströmt werden. Vorzugsweise sind diese Aktivkohlebehälter so angeordnet, dass der Behälter mit der höchsten Standzeit - was die eingefüllte Aktivkohle betrifft - zuerst angeströmt wird.

Wie prinzipiell nach dem Stand der Technik bekannt, soll der Zulauf zur zweiten Stufe, nämlich der Zulauf zu den Aktivkohlefestbettreaktoren frei von gelöstem Sauerstoff sein.

Nach einer weiteren Ausgestaltung der Erfindung wird die Aktivkohle zu Beginn der Verfahrensführung mit Bakterien angeimpft, vorzugsweise mit bakterienhaltigen Granula. Zwischen der ersten und der zweiten Stufe findet eine Biomasserückhaltung vorzugsweise durch Membranfiltration statt, wodurch ein Übertritt des Belebtschlamms von der ersten in die zweite Stufe vermieden wird.

Das erfindungsgemäße Verfahren besitzt folgende Vorteile:
1) In der Belebtschlammbiologie (erste Stufe) werden biologisch abbaubare Stoffe abgebaut und belasten die Kapazität der Aktivkohle nicht. Weiterhin wird entstehendes Nitrat durch die Denitrifikation abgebaut. Der hierzu notwendige Kohlenstoff entsteht aus dem Zerfall von Biomasse.
2) Auf der Aktivkohle werden biologisch nicht-abbaubare Kohlenstoffverbindungen zurückgehalten.
3) In dem speziellen Biofilm, der sich auf der Aktivkohle bildet und in den daraus hervorgehenden bakteriellen Granula, werden Nitrit und Ammonium durch die anaerobe Ammoniumoxidation zu Luftstickstoff abgebaut.

Die anaerobe Ammoniumoxidation findet innerhalb der vorhandenen Aktivkohlebehälter auf der Oberfläche von Aktivkohlepartikeln statt. Da die Bakterien, die die anaerobe Ammoniumoxidation katalysieren, extrem langsam wachsen, muss die Aktivkohle zu Beginn einer Verfahrensführung mit entsprechenden Bakterien angeimpft werden. Zum Animpfen benutzt man entweder planctomycetenhaltige Granula bzw. Belebtschlamm oder Aktivkohle, die bereits selektiv bewachsen ist. Das Impfmaterial kann also aus Anlagen stammen, die bereits einen stabilen Anlagenbetrieb mit anaerober Ammoniumoxidation haben oder die Granular speziell für den Zweck des Animpfens vorhalten. Das Animpfmaterial muss frisch sein und darf nicht mit Sauerstoff in Verbindung kommen. Frisch heißt in diesem Zusammenhang, dass das Material innerhalb von 1 bis 2 Tagen zum Animpfen verwendet wird.

Nach der Animpfung müssen die Aktivkohlebehälter sofort mit sauerstofffreiem Abwasser aus der jeweiligen Reinigungsanlage beaufschlagt werden. Beim Animpfen sind zwei Fälle zu unterscheiden:
1.) Es ist nur ein Aktivkohlebehälter vorhanden oder
2.) es sind mehrere Aktivkohlebehälter vorhanden.

Das Animpfen kann bei einzelnen Aktivkohlebehältern durch Vermischen der Aktivkohle mit Bakterien oder bakterienhaltigen Schlämmen oder entsprechenden Granular erfolgen. Beim Animpfen einer Kolonne von Aktivkohlebehältern kann die frische Aktivkohle entweder wie oben beschrieben mit Impfmaterial vermischt werden oder die Behälter müssen so verschaltet sein, dass immer erst ein angeimpfter Behälter direkt nach der Biomasseabtrennung durchflossen wird. Erst danach dürften Behälter mit frischer Aktivkohle durchflossen werden. Der Animpfvorgang erfolgt immer in Fließrichtung des Abwassers.

Die Vorteile des vorbeschriebenen Verfahrens werden besonders deutlich bei der Behandlung von Abwässern mit einem großen C/N-Verhältnis. Die verwendete Vorrichtung besteht aus mindestens zwei Behältern, bei denen der erste Behälter als Belebtschlammbehälter und der zweite Behälter als Aktivkohlebehälter ausgebildet sind. In dem Belebtschlammbehälter werden biologisch abbaubare Verbindungen abgebaut, wobei durch Oxidation von Ammonium das Nitrit erzeugt wird. Eine Verfahrenssteuerung erfolgt über eine Steuerung der Ammoniumkonzentration.

In der zweiten Stufe wird mindestens ein mit spezifischer Biomasse angeimpfter Aktivkohlefestbettreaktor verwendet, wobei sich auf der äußeren Oberfläche der Aktivkohlepartikel ein spezifischer Biofilm bildet, von dem die Bildung weiterer Granula ausgeht. In den Aktivkohlefestbettreaktoren dient die innere Oberfläche der Aktivkohlepartikel zur Absorption von inerten Kohlenstoffverbindungen. Auf diese Weise werden in der zweiten Stufe nicht nur die Nitrite zu Stickstoffgas umgewandelt, sondern auch etwaige noch vorhandene Kohlenstoffverbindungen eliminiert.

## Patentansprüche

1. Verfahren zur Behandlung von Abwasser, insbesondere Deponiewasser, in einem zweistufigen Prozess, bei dem das Abwasser in einer ersten Stufe mit einem nitrifizierenden Belebtschlamm vermischt und das im Abwasser enthaltene Ammonium durch Einstellung einer Temperatur zwischen 28 °C und 39 °C und/oder eines Sauerstoffgehaltes zwischen 0,01 mg/L und 0,4 mg/L nur zum Teil, nämlich zu maximal 50% zu Nitrit oxidiert und das in der vom Belebtschlamm getrennten wässrigen Phase enthaltene Nitrit und Ammonium anschließend in einer zweiten Stufe unter Sauerstoffausschluss in einem oder mehreren Aktivkohlefestbettreaktoren, die zu Beginn der Verfahrensführung mit planctomycetenhaltiger Granula angeimpft sind, zu molekularem Stickstoff reagieren, wobei das Animpfverhältnis zwischen eingesetzter Aktivkohle und planctomycetenhaltiger Granula bezogen auf das Volumen zwischen 100:1 und 10:1 liegt.

2. Verfahren nach Anspruch 1, **dadurch gekennzeichnet, dass** mehrere in Reihe geschaltete Aktivkohlefestbettreaktoren nacheinander durchströmt werden.

3. Verfahren nach Anspruch 1 oder 2, **dadurch gekennzeichnet, dass** in der ersten Stufe der Ammoniumgehalt gesteuert wird.

4. Verfahren nach einem der Ansprüche 1 bis 3, **dadurch gekennzeichnet, dass** die erste Stufe unter mikroaerophilen Bedingungen betrieben wird.

5. Verfahren nach einem der Ansprüche 1 bis 4, **dadurch gekennzeichnet, dass** über eine Prozesssteuerung ein NH₄-N/NO₂-N-Verhältnis im Ablauf der ersten Stufe von 1:1 bis 1:1,2, vorzugsweise 1:1,1 eingestellt wird.

6. Verfahren nach einem der Ansprüche 1 bis 5, **dadurch gekennzeichnet, dass** der Zulauf zur zweiten Stufe, nämlich der Zulauf zu den Aktivkohlefestbettreaktoren frei von gelöstem Sauerstoff ist.

7. Verfahren nach einem der Ansprüche 1 bis 6, **dadurch gekennzeichnet, dass** das Animpfverhältnis zwischen eingesetzter Aktivkohle und planctomycetenhaltiger Granula bezogen auf das Volumen bei 50:1 liegt.

8. Verfahren nach einem der Ansprüche 1 bis 7, **dadurch gekennzeichnet, dass** die innere Oberfläche der eingesetzten Aktivkohle bevorzugt zwischen 600 m²/g und 1.800 m²/g liegt.

9. Verfahren nach einem der Ansprüche 1 bis 8, **dadurch gekennzeichnet, dass** die erste und die zweite Stufe durch eine Biomasserückhaltung, vorzugsweise durch eine Membranfiltration, getrennt sind.

## Claims

1. Method for treating wastewater, in particular landfill water, in a two-stage process, in which the wastewater is mixed in a first stage with a nitrifying activated sludge and the ammonium present in the wastewater is oxidized only in part, namely to a maximum of 50%, to nitrite by setting a temperature between 28°C and 39°C and/or an oxygen content between 0.01 mg/l and 0.4 mg/l and the nitrite and ammonium present in the aqueous phase separated off from the activated sludge then react to form molecular nitrogen in a second stage in the absence of oxygen in one or more activated-carbon fixed-bed reactors which are inoculated with planctomycetes-containing granules at the start of the process procedure, wherein the inoculation ratio between activated carbon used and planctomycetes-containing granules, based on volume, is between 100:1 and 10:1.

2. Method according to Claim 1, **characterized in that** flow passes successively through a plurality of series-connected activated-carbon fixed-bed reactors.

3. Method according to Claim 1 or 2, **characterized in that** the ammonium content is controlled in the first stage.

4. Method according to any one of Claims 1 to 3, **characterized in that** the first stage is operated under microaerophilic conditions.

5. Method according to any one of Claims 1 to 4, **characterized in that** an NH₄-N/NO₂-N ratio in the outlet of the first stage of 1:1 to 1:1.2, preferably 1:1.1, is set via a process controller.

6. Method according to any one of Claims 1 to 5, **characterized in that** the feed for the second stage, namely the feed to the activated-carbon fixed-bed reactors, is free from dissolved oxygen.

7. Method according to any one of Claims 1 to 6, **characterized in that** the inoculation ratio between activated carbon used and planctomycetes-containing granules, based on volume, is 50:1.

8. Method according to any one of Claims 1 to 7, **characterized in that** the internal surface area of the activated carbon used is preferably between 600 m²/g and 1800 m²/g.

9. Method according to any one of Claims 1 to 8, **characterized in that** the first and second stages are separated by biomass retention, preferably by a membrane filtration.

## Revendications

1. Procédé de traitement d'eaux usées, en particulier d'eaux de décharge, dans un processus à deux étapes, dans lequel, dans une première étape, les eaux usées sont mélangées avec une boue activée nitrifiante et l'ammonium contenu dans les eaux usées ne s'oxyde en nitrite que partiellement, à savoir pour 50 % au maximum, en réglant une température comprise entre 28 °C et 39 °C et/ou une teneur en oxygène comprise entre 0,01 mg/L et 0,4 mg/L, et ensuite, dans une deuxième étape, le nitrite et l'ammonium contenus dans la phase aqueuse séparée de la boue activée réagissent, sous l'exclusion d'oxygène, dans un ou plusieurs réacteur(s) à lit fixe de charbon actif qui sont inoculés, au début du processus, de granules contenant des planctomycètes, de manière à donner de l'azote moléculaire, le rapport d'inoculation entre le charbon actif mis en oeuvre et les granules contenant des planctomycètes, par rapport au volume, étant compris entre 100 à 1 et 10 à 1.

2. Procédé selon la revendication 1, **caractérisé par le fait que** plusieurs réacteurs à lit fixe de charbon actif qui sont montés en série sont traversés successivement.

3. Procédé selon la revendication 1 ou 2, **caractérisé par le fait que**, dans ladite première étape, la teneur en ammonium est commandée.

4. Procédé selon l'une quelconque des revendications 1 à 3, **caractérisé par le fait que** ladite première étape est opérée dans des conditions micro-aérophiles.

5. Procédé selon l'une quelconque des revendications 1 à 4, **caractérisé par le fait que**, dans le déroulement de ladite première étape, on règle, via une commande de processus, un rapport NH₄-N/NO₂-N compris entre 1 à 1 et 1 à 1,2, de préférence de 1 à 1,1.

6. Procédé selon l'une quelconque des revendications 1 à 5, **caractérisé par le fait que** l'arrivée à la deuxième étape, à savoir l'arrivée aux réacteurs à lit fixe de charbon actif est dépourvue d'oxygène dissous.

7. Procédé selon l'une quelconque des revendications 1 à 6, **caractérisé par le fait que** le rapport d'inoculation entre le charbon actif mis en oeuvre et les granules contenant des planctomycètes, par rapport au volume, est de 50 à 1.

8. Procédé selon l'une quelconque des revendications 1 à 7, **caractérisé par le fait que** la surface intérieure du charbon actif mis en oeuvre est comprise, de préférence, entre 600 m²/g et 1.800 m²/g.

9. Procédé selon l'une quelconque des revendications 1 à 8, **caractérisé par le fait que** lesdites première et deuxième étapes sont séparées l'une de l'autre par une rétention de biomasse, de préférence par une filtration sur membrane.
